# EUROPEAN PATENT SPECIFICATION

(11) **EP 1 408 709 B1**
(45) Date of publication and mention of the grant of the patent: **29.11.2006**
(21) Application number: 03396093.1
(22) Date of filing: 07.10.2003
(51) Int. Cl.: H04Q 7/32, H04L 12/56

(54) **Electronic device update by establishing data connection with server via a mobile station**
Aktualisierung eines elektronischen Gerätes durch die Aufbau von Datenverbindungen mit einem Server via eine Mobilstation
La mise à jour d'un dispositif électronique en établissement d'un liaison de données avec serveur en utilisant une station mobile

(30) Priority: 07.10.2002 FI 20021784
(43) Date of publication of application: 14.04.2004
(73) Proprietor: Nokia Corporation, 02150 Espoo (FI)
(72) Inventor: Koskimies, Oskari, 00950 Helsinki (FI)
(74) Representative: Kupiainen, Juhani Kalervo

(56) References cited:
- WO-A-01/60096
- WO-A-98/57507
- US-A- 5 668 591

## Description

The present invention relates to a method and arrangement for updating electronic devices by means of a mobile phone, by applying a method defined in the appended claims.

Several modern electronic devices can be updated by loading in new software, sounds, multimedia or other data. Examples of such devices are MP3 instruments, electronic games and pocket computers. Data is generally transmitted in the device either by means of a computer, by first searching the data in the Internet, or by providing the device with a separately sold memory module. Owing to its flexibility and cost-effectiveness, the Internet is a popular channel for distributing data. In the case of cheap and/or small devices, it is generally not possible to add readiness for a direct Internet connection, because the required electronics and the memory required by the necessary software as well as the user interface cost money and take up space. Instead, there is often used a method where data is first transferred to a computer by means of an Internet connection, whereafter the data is transferred to the device in question by a simpler protocol (for example an infrared and OBject EXchange protocol, i.e. OBEX, or Universal Serial Bus, i.e. USB).

However, the problem when using a computer is that updating can only be performed when the user is at the computer, and usually a separate software is required for that. In addition, the invoicing of updates is troublesome, because in the Internet invoicing is typically carried out by a credit card, in which case the user must feed in his credit card data. The giving of credit card data through the Internet is also a safety problem, for which a satisfactory and widely applicable solution has not yet been found. Invoicing in the Internet also is a psychological problem, because people are not used to pay for the contents of the Internet. Moreover, tabletop computers do not typically comprise an infrared port, wherefore the user must in one way or another be able to physically connect the device to the computer. Another possibility is that the user must install in the computer a specific auxiliary device for performing the updating (for instance the updating and downloading accessory of a pocket computer).

The use of a mobile phone for updating a device solves the above mentioned problems. Updating can be carried out anywhere by using the normal mobile phone functions, and invoicing is carried out through the telephone bill. In this way the problems connected with the troublesome procedure and safety are avoided. Moreover, people are used to paying for the use of the telephone, which means that the psychological problem of willingness to pay for the use of the Internet does not exist. In the data transmission between the mobile phone and the device, there can be used the infrared port or the Bluetooth module (short-range radio connection) of the mobile phone, and therefore it is not necessary to connect the device to the mobile phone. Naturally it also is possible to connect the mobile phone to the device by a cable.

In the prior art it is known that data can be transmitted to another device through a telephone. For example telephone book information can be transmitted from one telephone to another by the infrared technology. However, the quantity of transmitted data is very limited, because the mobile phones that are generally available can only transmit data units having the quantity of one short message (SMS), about 160 characters. This limitation is due to the fact that current mobile phones do not generally include a capacity for saving and/or transmitting free-form files, which means that it is generally not possible to look up files for instance by the WAP protocol and then send them by infrared or Bluetooth to another device. On the other hand, the saving and further transmitting or printing of short messages by infrared is possible in various different types of mobile phones.

The length limitation of a short message prevents its use as the main data transmission channel of updates. One kilobyte of data would require more than 6 short messages, which should be separately saved in the mobile phone and then transmitted to the device to be updated. However, the size of the updating data can easily be of the order of tens of kilobytes or more, which means that in practice the use of short messages is not possible for this purpose.

Another known possibility is that the device to be updated uses the mobile phone as a modem, in the same way as a portable computer. In that case the user would feed in the device the address of the update to be downloaded (the URL or possibly only the telephone number), and the device would then establish a connection, by means of the mobile phone, to said address and would there look up the updating data. In that case, however, the device to be updated should include a user interface (keypad and display) for feeding in the address, which increases the price of the device and also enlarges its size.

Document WO 98/57507 A (TELIA AB) 17 December 1998 (1998-12-17), which represents the closest state of the art, discloses SMS over-the-air programming of a computer device through a GSM network via the use of a mobile phone as a transceiver. It is further disclosed how the mobile phone and the computer may synchronise databases, also via short message service SMS transmission.

Document WO 01/60096 A (SHEAHAN RORY ANTHONY) 16 August 2001 (2001-08-16) discloses the uploading and downloading of data between a computer and a data storage using a mobile phone as the transceiver. Data exchange is done via the transmission of emails over a cellular network after the email address has been provided from the mobile phone to the data storage.

Document US-A-5 668 591 (SHINTANI PETER) 16 September 1997 (1997-09-16) discloses the selection and downloading of games to a device via a TV cable box. The cable box initially downloads the game menu, which it transmits to the device wirelessly. Then after game selection, it download the actual game, which is subsequently transmitted to the device for playing.

The object of the invention is to eliminate the above described drawbacks and enable the use of existing mobile phones in the updating of small and/or cheap electronic devices without having to harmfully restrict the size of the updating data, and so that the device to be updated need not comprise a user interface that enlarges the size and increases the price of the device in question.

According to the invention, this object can be achieved by first sending the address data from the mobile phone to the device in short message form by infrared or Bluetooth. Thereafter the device can use the mobile phone as a modem and look up the updating data in said address. Typically the user does not write the address in the short message itself, but sends an order short message in similar fashion as nowadays when ordering ringing tones. As a response, there arrives a short message containing the required address information. The user sends this short message by infrared or Bluetooth to the device to be updated, whereafter he sets his mobile phone in the modem mode. The device to be updated makes a connection to the mobile phone and starts using it as a modem, thus establishing a data transmission connection to the address that was included in the short message. When the connection is established, the device can download the updating data.

More precisely said, the method and arrangement according to the invention are characterized by what is set forth in the characterizing parts of the appended claims.

The invention is described in more detail below with reference to the appended drawings:
Fig. 1: The device to be updated
Fig. 2: A diagram of the updating process
Fig. 3: A flow diagram illustrating the operation of the device to be updated
Fig. 4: A flow diagram illustrating the operation of the user and the mobile phone
Fig. 5: A flow diagram illustrating the operation of the server

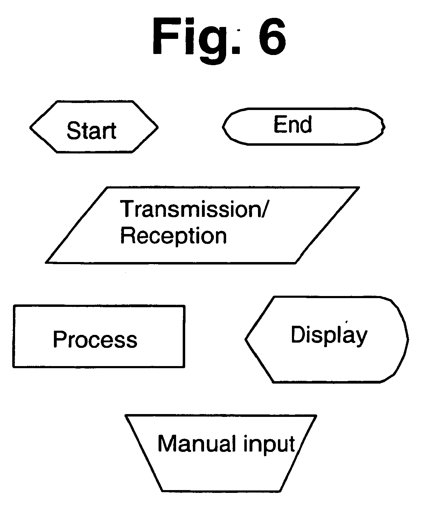

Fig. 6: Explanations of the symbols used in the flow diagrams

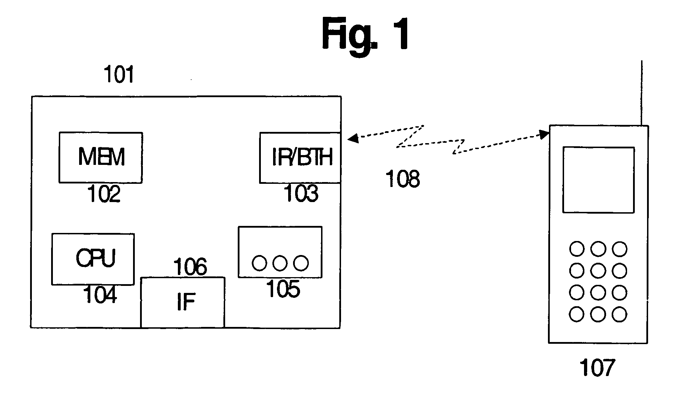

Fig. 1 illustrates a device to be updated (101). It includes at least memory MEM for the updating data (102), a data transmission unit IR/BTH (103) for communicating (108) with the mobile phone (107) (for example infrared or Bluetooth), a processor unit CPU (104) that can be for example a microcontroller or a microprocessor, and an interface IF (106) for the functions proper of the device to be updated. If for instance the device is used for playing digital music, the interface IF (106) could offer for the music playing components access to the updating data, i.e. music data recorded in the memory MEM (102). However, this example is by no means restrictive - for a man skilled in the art it is understandable that the interface IF (106) can be realized in many different ways without departing from the basic idea of the invention. In addition, the device to be updated may comprise a user interface (105) containing for example LED-lights, by which the user can observe how the updating proceeds and detect possible error situations. Again, this example is not restrictive, and a man skilled in the art understands that the realization of the user interface can be altered without affecting the basic idea of the invention. The user interface can also be left out altogether.

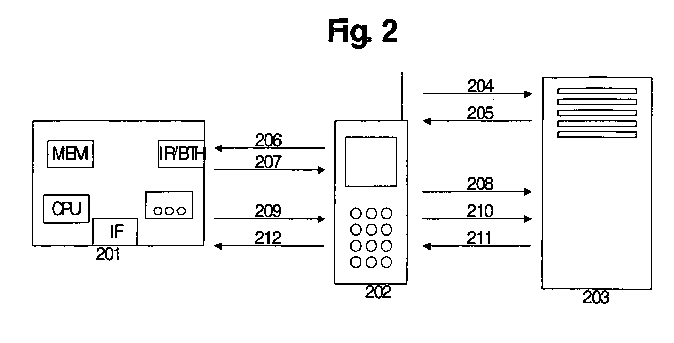

Fig. 2 illustrates the updating process. The user sends by the mobile phone (202) a short message 204 to the server (203). The short message 204 includes information indicating at least which updating data should be downloaded. In a case where only one kind of updating data can be ordered from the server, it is not even necessary to identify the updating data in the short message 204. The server (203) sends back a short message 205 containing at least an address (for example a telephone number) with which the device to be updated must establish a data connection (for example a GSM data call), and possibly information by which the data to be downloaded is identified to the server when communicating through the data connection. If only one kind of updating data can be downloaded from the telephone number contained by the short message 205 (i.e. if the number identifies the updating data unambiguously), a function that identifies the updating data is not necessary in the short message.

When the mobile phone (202) has received the short message 205, the user sends it (206) (for example by infrared or Bluetooth) to the device to be updated (201). The device to be updated (201) picks from the short message the address and possibly some information for identifying the updating data. Thereafter the device to be updated (201) commands (207) the mobile phone (202) to establish a data connection to the address that was contained in the SMS. The mobile phone (202) establishes the data connection (208) to said address, i.e. to the updating server (203). It is pointed out that in order to enable the device to be updated (201) to command the mobile phone (202), it may be necessary to set the mobile phone in a particular standby mode (for instance to activate the infrared).

When the data connection is established, the device to be updated (201) sends a request 209 for the updating data. The request may contain information that identifies the updating data, if such information was available. The mobile phone (202) transmits the request further (210). After receiving the request 210, the server sends the requested updating data 211. The mobile phone (202) transmits the data further (212) to the device (201) to be updated.

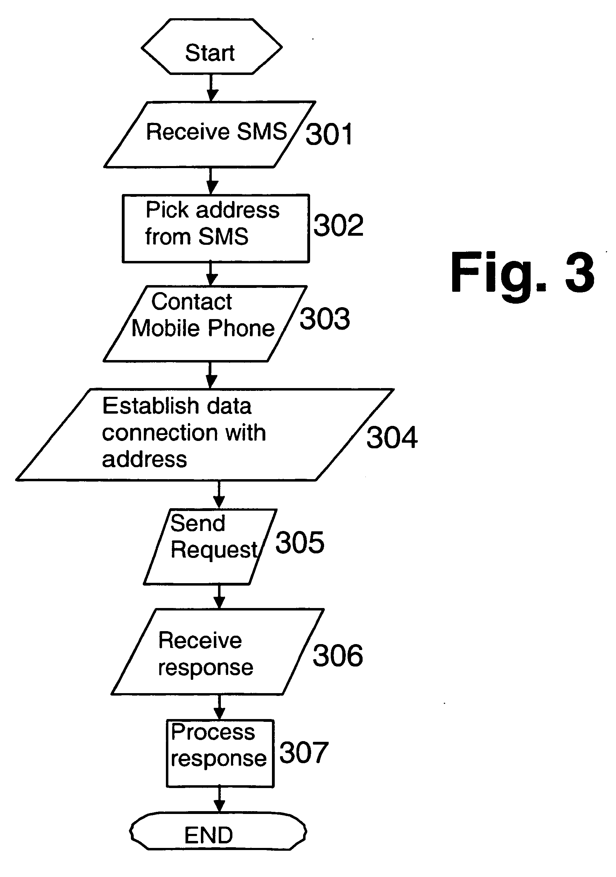

Fig. 3 is a flow diagram illustrating the operation of the device to be updated. First the device receives an SMS from the mobile phone (301), for instance by Bluetooth or by infrared. Then the device picks from the SMS the address and possibly information identifying the updating data (302). After receiving the address, the device contacts the mobile phone (303) (for example by infrared or by Bluetooth). Thereafter the device commands the mobile phone to establish a data connection to the address (304). When the data connection is established, the device sends a request for the updating data (305). After some time, a response (306) arrives from the server. Then the device processes the response (307) and probably saves the received updating data in the memory.

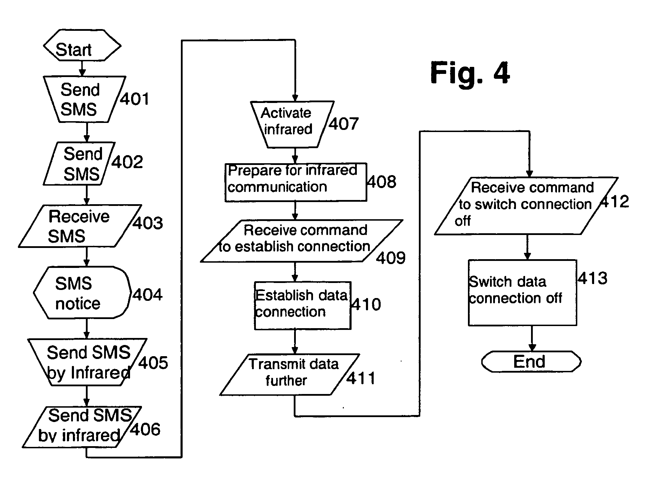

Fig. 4 is a flow diagram illustrating the operation of the user and the mobile phone. First the user writes an order SMS and gives a command to send it (401). The mobile phone sends the SMS (402). After some time, there arrives a response SMS from the server, and the mobile phone receives (403) it. The mobile phone informs the user of the arrived SMS on the display or by a sound alarm (404). The user gives a command to send the SMS by infrared (405). The mobile phone sends the SMS by infrared (406). Thereafter the user activates in the mobile phone the infrared (407), whereafter the mobile phone prepares for infrared communication (408). It should be observed that instead of infrared, there could also be used Bluetooth or some other short-range communication method (steps 405 - 408). After some time, the mobile phone receives from the device to be updated a command to establish a data connection to a given address (409). The mobile phone establishes the requested connection (410). Then the mobile phone transmits data between the device to be updated and the data connection (411). Finally the mobile phone receives from the device to be updated a command to switch off the data connection (412), whereafter the mobile phone switches the data connection (413) off.

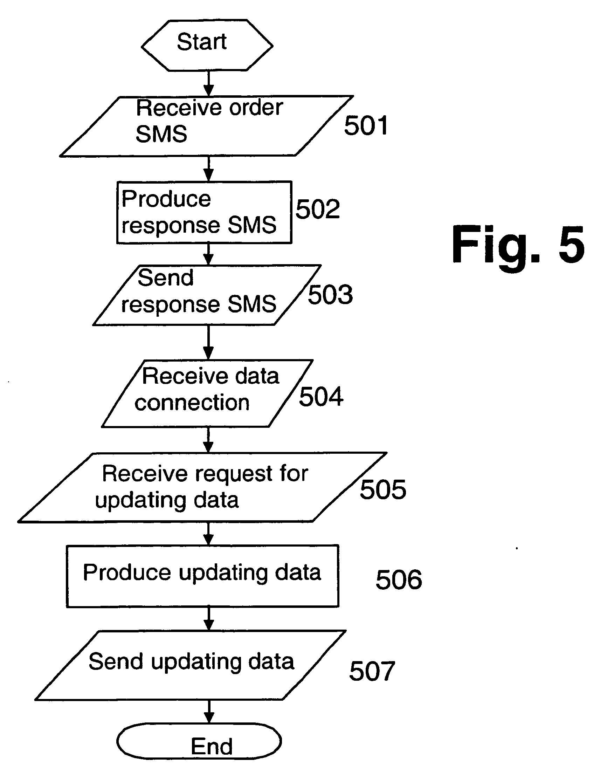

Fig. 5 is a flow diagram illustrating the operation of the server. First the server receives an order SMS (501) that identifies the requested updating data (in case there are several possibilities). Then the server produces a response SMS that contains an identifier for the requested updating data, and a server address (502). Then the server sends a response SMS to the same number from which the order SMS was transmitted (503). After some time, the server receives a data connection (504). Then along the data connection, there arrives a request for the updating data (505). The request may contain information identifying the updating data. The server produces the updating data for instance by looking it up in a database on the basis of said information (506). Then the server sends the updating data along the connection (507).

It is pointed out that the above specification only describes one possible embodiment of the invention. The operation can be altered within the scope of the appended claims without changing the basic idea of the invention. For example, although the server here is described as one uniform entity, it may be divided into several separate parts. Likewise, the response SMS sent by the server may also contain other information than what is described above. In addition, instead of short messages (SMS), there can be used multimedia messages (MMS) or some other corresponding messages types in other than GSM networks. Moreover, instead of sending the SMS containing the address information from the mobile phone to the device to be updated, the device to be updated may browse through all SMS contained in the mobile phone (mobile phones generally support these kind of functions in order to be able to be controlled by a computer) and select the correct SMS on the basis of a key word included therein. In that case, however, it may be necessary to connect the mobile phone to the device to be updated by a cable, i.e. a data transmission cable. In addition, the type of the employed data connection can be for instance GSM Data (the basic data connection in GSM networks), HSCSD (High-Speed Circuit-Switched Data), GPRS (General Packet Radio Service), a data connection type that is not based on GSM, or a new data connection type to be implemented in the future.

## Claims

1. A method for updating electronic devices (101,201), ***characterized* in that** the method comprises the following steps:
I. a message (108,204,205,206) containing address information of an updating server is transmitted from a mobile phone (107,202) to a device (101,201) to be updated by a short-range communication method,
II. the device (101,201) to be updated establishes via the mobile phone (107,202) a data connection (207,208,210,211,212) to the address contained in the message and receives updating data through this data connection (207,208,210,211,212).

2. A method according to claim 1, ***characterized* in that** the device to be updated searches in the mobile phone at least one message and identifies among the searched messages the one that contains the address information.

3. A method according to claim 1 or 2, ***characterized* in that** the mobile phone first sends an order message, and as a response to said order messages, there is received a message containing the address information described in claim 1.

4. A method according to claim 3, ***characterized* in that** the order message contains information that identifies the requested updating data.

5. A method according to claim 1, 2, 3 or 4, ***characterized* in that** the employed short-range communication method is infrared, Bluetooth or a cable.

6. An electronic device (101,201) comprising a memory (102) for an updating data, a data transmission unit (103) for communicating with a mobile phone (107,202), a processing unit (104) and an interface (106) for functions proper of the device to be updated, ***characterized* in that** the device is arranged:
I. to receive a message (108,204,205,206) containing address information from the mobile phone (107,202) by some short-range communication method,
II. to pick the address information from the received message (108,204,205,206),
III. to establish, by means of the mobile phone (107,202), a data connection (207,208,210,211,212) with the address contained in the message (108,204,205,206),
IV. to download the updating data through the data connection (207,208,210,211,212).

7. An electronic device (101,201) comprising a memory (102) for an updating data, a data transmission unit (103) for communicating with a mobile phone (107,202), a processing unit (104) and an interface (106) for functions proper of the device to be updated, ***characterized* in that** the device is arranged:
I. to fetch, by means of some short-range communication method, in the mobile phone at least one message (108,204,205,206) contained therein,
II. to identify, among the messages (108,204,205,206) that were looked up, the one that contains address information,
III. to pick the address information from the identified message (108,204,205,206),
IV. to establish, by means of the mobile phone (107,202), a data connection (207,208,210,211,212) to the address contained in the message,
V. to download the updating data through the data connection (207,208,210,211,212).

8. An electronic device according to claim 6 or 7, ***characterized* in that** the employed short-range communication method is infrared, Bluetooth or a cable.

9. A method according to claim 1, 2, 3, 4 or 5, ***characterized* in that** the messages are short messages (SMS) or multimedia messages [MMS].

10. A device according to claim 6, 7 or 8, ***characterized* in that** the messages are short messages (SMS) or multimedia messages [MMS].

## Patentansprüche

1. Verfahren zum Aktualisieren von elektronischen Vorrichtungen (101,201), **dadurch gekennzeichnet, dass** das Verfahren die folgenden Schritte umfasst:
I. eine Nachricht (108,204,205,206), welche eine Adresseninformation eines Aktualisierungsservers enthält, wird von einem Mobiltelefon (107,202) an eine Vorrichtung (101,201) übertragen, um durch ein Kurzstrecken-Kommunikationsverfahren aktualisiert zu werden,
II. die zu aktualisierende Vorrichtung (101,201) baut durch das Mobiltelefon (107,202) eine Datenverbindung (207,208,210,211,212) zu der Adresse auf, die in der Nachricht enthalten ist und empfängt Aktualisierungsdaten durch diese Datenverbindung (207,208,210,211,212).

2. Verfahren gemäß Anspruch 1, **dadurch gekennzeichnet, dass** die zu aktualisierende Vorrichtung in dem Mobiltelefon mindestens eine Nachricht sucht und unter den gesuchten Nachrichten diejenige identifiziert, welche die Adressinformation enthält.

3. Verfahren gemäß Anspruch 1 oder 2, **dadurch gekennzeichnet, dass** das Mobiltelefon zuerst eine Anforderungsnachricht sendet und als eine Antwort auf die Anforderungsnachrichten, eine Nachricht empfangen wird, welche die in Anspruch 1 beschriebene Adressinformation enthält.

4. Verfahren gemäß Anspruch 3, **dadurch gekennzeichnet, dass** die Anforderungsnachricht Informationen enthält, welche die angefragten Aktualisierungsdaten identifiziert.

5. Verfahren gemäß Anspruch 1,2,3 oder 4, **dadurch gekennzeichnet, dass** das eingesetzte Kurzstrecken-Kommunikationsverfahren Infrarot, Bluetooth oder ein Kabel darstellt.

6. Elektronische Vorrichtung (101,201), aufweisend einen Speicher (102) für Aktualisierungsdaten, eine Datenübertragungseinheit (103) zur Kommunikation mit einem Mobiltelefon (107,202), eine Verarbeitungseinheit (104) und eine Schnittstelle (106) für Funktionen, welche der zu aktualisierenden Vorrichtung zugehörig sind, **dadurch gekennzeichnet, dass** die Vorrichtung eingerichtet ist:
I. um eine Nachricht (108,204,205,206), welche Adressinformationen von dem Mobiltelefon (107,202) enthält, durch irgendein Kurzstrecken-Kommunikationsverfahren zu empfangen,
II. die Adressinformation aus der empfangenen Nachricht (108,204,205,206) auszulesen,
III. mittels des Mobiltelefons (107,202), eine Datenverbindung (207,208,210,211,212), zu der in der Nachricht (108,204,205,206) enthaltenen Adresse aufzubauen.
IV. die Aktualisierungsdaten durch die Datenverbindung (207,208,210,211,212), herunter zu laden.

7. Elektronische Vorrichtung (101,201), umfassend einen Speicher (102) für Aktualisierungsdaten, eine Datenübertragungseinheit (103) zur Kommunikation mit einem Mobiltelefon (107,202), eine Verarbeitungseinheit (104) und eine Schnittstelle (106) für Funktionen, welche der zu aktualisierenden Vorrichtung zugehörig sind, **dadurch gekennzeichnet, dass** die Vorrichtung eingerichtet ist:
I. mittels irgendeines Kurzstrecken-Kommunikationsverfahrens in dem Mobiltelefon, mindestens eine Nachricht (108,204,205,206), welche darin enthalten ist, abzurufen.
II. unter den Nachrichten (108,204,205,206) die nachgesehen wurden, diejenige zu identifizieren, die Adressinformation enthält,
III. die Adressinformation aus der identifizierten Nachricht (108,204,205,206) auszulesen,
IV. mittels des Mobiltelefons (107,202), eine Datenverbindung (207,208,210,211,212), zu der in der Nachricht enthaltenen Adresse aufzubauen,
V. die Aktualisierungsdaten durch die Datenverbindung (207,208,210,211,212), herunter zu laden.

8. Elektronische Vorrichtung gemäß Anspruch 6 oder 7, **dadurch gekennzeichnet, dass** das eingesetzte Kurzstrecken-Kommunikationsverfahren Infrarot, Bluetooth oder ein Kabel darstellt.

9. Verfahren gemäß Anspruch 1, 2, 3, 4, oder 5, **dadurch gekennzeichnet, dass** die Nachrichten Kurznachrichten (SMS) oder Multimedianachrichten [MMS] sind.

10. Vorrichtung gemäß Anspruch 6, 7, oder 8, **dadurch gekennzeichnet, dass** die Nachrichten Kurznachrichten (SMS) oder Multimedianachrichten [MMS] sind.

## Revendications

1. Procédé pour mettre à jour des dispositifs électroniques (101, 201), **caractérisé en ce que** le procédé comprend les étapes suivantes :
I. un message (108, 204, 205, 206) contenant des informations d'adresse d'un serveur de mise à jour est transmis d'un téléphone mobile (107, 202) à un dispositif (101, 201) devant être mis à jour par un procédé de communication à faible portée,
II. le dispositif (101, 201) devant être mis à jour établit, via le téléphone mobile (107, 202), une connexion de données (207, 208, 210, 211, 212) vers l'adresse contenue dans le message et reçoit des données de mise à jour par l'intermédiaire de cette connexion de données (207, 208, 210, 211, 212).

2. Procédé selon la revendication 1, **caractérisé en ce que** le dispositif devant être mis à jour recherche dans le téléphone mobile au moins un message et identifie, parmi les messages recherchés, celui qui contient les informations d'adresse.

3. Procédé selon la revendication 1 ou 2, **caractérisé en ce que** le téléphone mobile envoie d'abord un message de commande et, en tant que réponse auxdits messages de commande, un message contenant les informations d'adresse décrit dans la revendication 1 est reçu.

4. Procédé selon la revendication 3, **caractérisé en ce que** le message de commande contient des informations qui identifient les données de mise à jour demandées.

5. Procédé selon la revendication 1, 2, 3 ou 4, **caractérisé en ce que** le procédé de communication à faible portée utilisé est l'infrarouge, Bluetooth ou un câble.

6. Dispositif électronique (101, 201) comprenant une mémoire (102) pour des données de mise à jour, une unité de transmission de données (103) pour communiquer avec un téléphone mobile (107, 202), une unité de traitement (104) et une interface (106) pour des fonctions propres au dispositif devant être mis à jour, **caractérisé en ce que** le dispositif est agencé :
I.pour recevoir un message (108, 204, 205, 206) contenant des informations d'adresse provenant du téléphone mobile (107, 202) par un certain procédé de communication à faible portée,
II. pour prendre les informations d'adresse du message reçu (108, 204, 205, 206),
III. pour établir, au moyen du téléphone mobile (107, 202), une connexion de données (207, 208, 210, 211, 212) vers l'adresse contenue dans le message (108, 204, 205, 206),
IV. pour télécharger les données de mise à jour par l'intermédiaire de la connexion de données (207, 208, 210, 211, 212).

7. Dispositif électronique (101, 201) comprenant une mémoire (102) pour des données de mise à jour, une unité de transmission de données (103) pour communiquer avec un téléphone mobile (107, 202), une unité de traitement (104) et une interface (106) pour des fonctions propres au dispositif devant être mis à jour, **caractérisé en ce que** le dispositif est agencé :
I. pour aller chercher, au moyen d'un certain procédé de communication à faible portée, dans le téléphone mobile, au moins un message (108, 204, 205, 206) contenu dans celui-ci,
II. pour identifier, parmi les messages (108, 204, 205, 206) qui ont été consultés, celui qui contient des informations d'adresse,
III. pour prendre les informations d'adresse du message (108, 204, 205, 206) identifié,
IV. pour établir, au moyen du téléphone mobile (107, 202), une connexion de données (207, 208, 210, 211, 212) vers l'adresse contenue dans le message,
V. pour télécharger les données de mise à jour par l'intermédiaire de la connexion de données (207, 208, 210, 211, 212).

8. Dispositif électronique selon la revendication 6 ou 7, **caractérisé en ce que** le procédé de communication à faible portée est l'infrarouge, Bluetooth ou un câble.

9. Procédé selon la revendication 1, 2, 3, 4 ou 5, **caractérisé en ce que** les messages sont des messages courts (SMS) ou des messages multimédias [MMS].

10. Dispositif selon la revendication 6, 7 ou 8, **caractérisé en ce que** les messages sont des messages courts (SMS) ou des messages multimédias [MMS].
